(19) **Europäisches Patentamt / European Patent Office / Office européen des brevets**

(11) **EP 4 345 424 B1**

(12) **FASCICULE DE BREVET EUROPEEN**

(45) Date de publication et mention de la délivrance du brevet:
**23.04.2025 Bulletin 2025/17**

(21) Numéro de dépôt: **23196025.3**

(22) Date de dépôt: **07.09.2023**

(51) Classification Internationale des Brevets (IPC):
**G01F 15/00** *(2006.01)* **G01D 4/00** *(2006.01)*
**G01F 15/063** *(2022.01)* **G01F 15/075** *(2006.01)*

(52) Classification Coopérative des Brevets (CPC):
**G01F 15/063; G01D 4/002; G01F 15/005;**
**G01F 15/0755;** G01D 2204/24; G01D 2204/26

(54) **SURVEILLANCE ET OPTIMISATION DE LA CONSOMMATION DE GAZ**

ÜBERWACHUNG UND OPTIMIERUNG DES GASVERBRAUCHS

MONITORING AND OPTIMIZING GAS CONSUMPTION

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR

(30) Priorité: **29.09.2022 FR 2209902**

(43) Date de publication de la demande:
**03.04.2024 Bulletin 2024/14**

(73) Titulaire: **Sagemcom Energy & Telecom SAS**
**92270 Bois-Colombes (FR)**

(72) Inventeur: **TEBOULLE, Henri**
**92500 RUEIL MALMAISON (FR)**

(74) Mandataire: **Cabinet Boettcher et al**
**5, rue de Vienne**
**75008 Paris (FR)**

(56) Documents cités:
EP-B1- 3 830 459        CN-A- 111 307 239
US-A- 5 782 263         US-A1- 2008 115 840
US-A1- 2011 000 310    US-A1- 2011 010 110
US-A1- 2020 116 541

**Description**

L'invention concerne le domaine des compteurs de gaz dits « intelligents ».

ARRIERE PLAN DE L'INVENTION

Un compteur de gaz comporte très classiquement un conduit interne dans lequel circule le gaz fourni à une installation par un réseau de distribution, et un dispositif de mesure qui mesure la consommation de gaz de ladite installation.

Le dispositif de mesure est par exemple un dispositif de mesure ultrasonique comprenant un transducteur amont (côté réseau) et un transducteur aval (côté installation). Chaque transducteur joue successivement le rôle d'un émetteur et d'un récepteur de signaux ultrasonores. Le transducteur amont émet ainsi un signal ultrasonore dans le conduit interne, qui est reçu par le transducteur aval après avoir parcouru dans le gaz un chemin prédéfini (de longueur parfaitement maîtrisée). Puis, le transducteur aval émet à son tour un signal ultrasonore, qui est reçu par le transducteur amont après avoir parcouru dans le gaz le chemin prédéfini (dans l'autre sens). Le dispositif de mesure ultrasonique évalue alors le débit de gaz à partir des temps de vol des signaux ultrasonores entre les transducteurs. L'estimation du débit de gaz permet d'évaluer et de facturer le volume de gaz consommé.

Certains compteurs de gaz modernes, dits « intelligents », doivent être capables de couper le débit de gaz.

Dans certains pays, lorsqu'un utilisateur final (c'est-à-dire un abonné) ne paye pas ses factures de gaz, le distributeur coupe le gaz jusqu'à la fin de la journée dès que la consommation de l'installation dépasse un certain seuil quotidien.

La coupure du gaz est classiquement réalisée en commandant une vanne motorisée qui est intégrée dans un boîtier de coupure situé à proximité du compteur, voire même qui est intégrée dans le compteur.

On envisage d'utiliser de tels compteurs de gaz intelligents pour aider l'utilisateur à limiter sa consommation de gaz. Une telle fonctionnalité présente un intérêt indéniable en matière d'écologie, mais est aussi très avantageuse pour le pouvoir d'achat de l'utilisateur.

Le document US 2020/116541 divulgue un compteur de gaz avec un dispositif de mesure d'une consommation de gaz d'une installation avec une vanne de coupure.

OBJET DE L'INVENTION

L'invention a pour objet de contrôler et d'optimiser la consommation de gaz d'une installation afin, notamment, de réduire la facture de gaz.

RESUME DE L'INVENTION

En vue de la réalisation de ce but, on propose un compteur de gaz comprenant :

- un dispositif de mesure agencé pour produire des mesures d'une consommation de gaz d'une installation ;
- une vanne, ou des moyens de communication avec un boîtier de coupure situé à l'extérieur du compteur et intégrant une vanne ;
- une unité de traitement agencée pour, chaque jour courant, au cours de chaque période courante d'un ensemble prédéterminé d'au moins une période successive définie dans le jour courant :

    o analyser les mesures de la consommation de gaz pour produire des mesures de paramètres prédéfinis relatifs à la consommation de gaz, et détecter, à partir desdites mesures des paramètres prédéfinis, une ou des phases de fonctionnement d'au moins un système prédéterminé de l'installation ;
    o pour chaque système prédéterminé, suite à chaque phase de fonctionnement dudit système prédéterminé, si une consommation cumulée de gaz pendant la période courante dudit système prédéterminé dépasse un seuil prédéterminé associé audit système prédéterminé, fermer la vanne jusqu'à la fin de ladite période courante.

Chaque jour courant est donc divisé en une ou plusieurs périodes successives.

Au cours de chaque période courante, le compteur de gaz détecte dans les mesures de la consommation de gaz une ou des signatures représentatives chacune du fonctionnement d'un système prédéterminé (par exemple une chaudière, un chauffe-eau), puis coupe le gaz jusqu'à la fin de la période courante lorsque la consommation cumulée de gaz sur la période courante par un même système dépasse un seuil prédéterminé. Le gaz est donc coupé uniquement dans des cas d'utilisation spécifiques, dans le but non pas de pénaliser l'utilisateur, mais plutôt de l'aider à limiter sa consommation de gaz.

On propose de plus un compteur de gaz tel que précédemment décrit, dans lequel les paramètres prédéfinis comprennent une durée de tirage de gaz et/ou un débit de gaz moyen et/ou un volume de gaz consommé.

On propose de plus un compteur de gaz tel que précédemment décrit, dans lequel, pour au moins l'un des au moins un système prédéterminé, le seuil prédéterminé associé audit système prédéterminé dépend de ladite période courante et/ou du jour courant et/ou de la période de l'année à laquelle appartient le jour courant.

On propose de plus un compteur de gaz tel que précédemment décrit, le compteur de gaz comprenant un capteur de température ou étant connecté à un équipement intégrant un capteur de température, le compteur de gaz étant tel que, pour au moins l'un des au moins un système prédéterminé, le seuil prédéterminé associé audit système prédéterminé dépend d'une température mesurée par le capteur de température.

On propose de plus un compteur de gaz tel que précédemment décrit, dans lequel ledit seuil prédéterminé est :

- égal à une première valeur lorsque ladite température est inférieure à un premier seuil ;
- égal à une deuxième valeur lorsque ladite température est supérieure à un deuxième seuil ;
- égal à une fonction linéaire de ladite température lorsque ladite température est comprise entre le premier seuil et le deuxième seuil.

On propose de plus un compteur de gaz tel que précédemment décrit, dans lequel, pour au moins l'un des au moins un système prédéterminé, l'unité de traitement est agencée, pour détecter les phases de fonctionnement dudit système prédéterminé, pour comparer les mesures des paramètres prédéfinis avec des niveaux prédéfinis qui dépendent de la période de l'année à laquelle appartient le jour courant.

On propose de plus un compteur de gaz tel que précédemment décrit, le compteur de gaz comprenant un capteur de température ou étant connecté à un équipement intégrant un capteur de température, le compteur de gaz étant tel que, pour au moins l'un des au moins un système prédéterminé, l'unité de traitement est agencée, pour détecter les phases de fonctionnement dudit système prédéterminé, pour comparer les mesures des paramètres prédéfinis avec des niveaux prédéfinis qui dépendent d'une température mesurée par le capteur de température.

On propose de plus un compteur de gaz tel que précédemment décrit, dans lequel l'ensemble prédéterminé d'au moins une période successive comprend au moins une période au cours de laquelle la fermeture de la vanne est interdite.

On propose de plus un compteur de gaz tel que précédemment décrit, dans lequel les au moins un système prédéterminé comprennent une chaudière et un chauffe-eau.

On propose de plus un compteur de gaz tel que précédemment décrit, dans lequel la vanne est une vanne à bille.

On propose de plus un procédé de surveillance, mis en œuvre dans l'unité de traitement d'un compteur de gaz tel que précédemment décrit, et comprenant les étapes, chaque jour courant, au cours de chaque période courante d'un ensemble prédéterminé d'au moins une période successive définie dans le jour courant, de :

o analyser les mesures de la consommation de gaz pour produire des mesures de paramètres prédéfinis relatifs à la consommation de gaz, et détecter, à partir desdites mesures des paramètres prédéfinis, une ou des phases de fonctionnement d'au moins un système prédéterminé de l'installation ;

o pour chaque système prédéterminé, suite à chaque phase de fonctionnement dudit système prédéterminé, si une consommation cumulée de gaz pendant la période courante dudit système prédéterminé dépasse un seuil prédéterminé associé audit système prédéterminé, fermer la vanne jusqu'à la fin de ladite période courante.

On propose de plus un procédé de surveillance tel que précédemment décrit, comprenant les étapes, pour la période courante, de :

- détecter un début d'un tirage de gaz ;
- à la fin dudit tirage de gaz, estimer un débit de gaz moyen au cours dudit tirage de gaz ;
- détecter à partir du débit de gaz moyen une phase de fonctionnement de l'un des au moins un système prédéterminé de l'installation ;
- comparer la consommation cumulée de gaz pendant la période courante dudit système prédéterminé avec le seuil prédéterminé associé audit système prédéterminé ;
- si la consommation cumulée de gaz dudit système prédéterminé est supérieure audit seuil prédéterminé, vérifier qu'une consommation courante de gaz est nulle et, si c'est le cas, fermer la vanne jusqu'à la fin de ladite période courante.

On propose de plus un procédé de surveillance tel que précédemment décrit, comprenant l'étape préliminaire de vérifier que la période courante n'est pas une période au cours de laquelle la fermeture de la vanne est interdite.

On propose de plus un programme d'ordinateur comprenant des instructions qui conduisent l'unité de traitement du compteur de gaz tel que précédemment décrit à exécuter les étapes du procédé de surveillance tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit de modes de mise en œuvre particuliers non limitatifs de l'invention.

BREVE DESCRIPTION DES DESSINS

Il sera fait référence aux dessins annexés parmi lesquels :

[Fig. 1] la figure 1 représente un compteur de gaz selon un premier mode de réalisation ;
[Fig. 2] la figure 2 représente des étapes d'un procédé de surveillance ;
[Fig. 3] la figure 3 représente un compteur de gaz selon un deuxième mode de réalisation.

DESCRIPTION DETAILLEE DE L'INVENTION

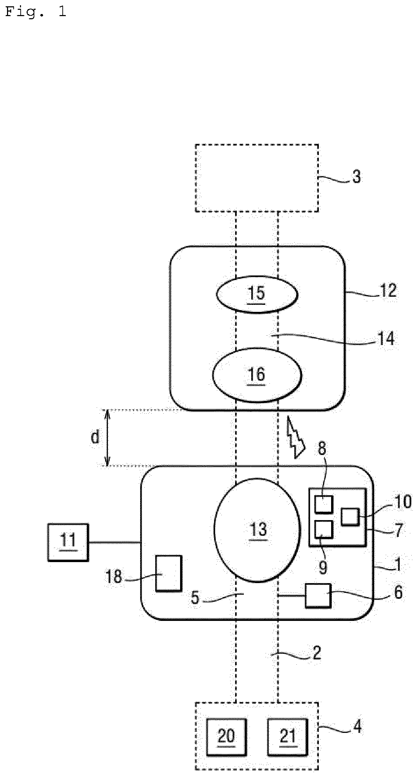

En référence à la figure 1, l'invention est ici mise en œuvre dans un compteur de gaz 1.

Le compteur de gaz 1 est monté sur un conduit principal 2 qui permet de relier un réseau de distribution de gaz 3 à une installation 4.

Le compteur 1 intègre un premier conduit interne 5 qui s'étend dans la continuité du conduit principal 2, de sorte que le gaz consommé par l'installation 4 passe dans le premier conduit interne 5.

Le compteur 1 intègre de plus un dispositif de mesure 6, qui est ici un dispositif de mesure ultrasonique et qui fonctionne comme le dispositif décrit plus tôt.

Le compteur 1 comporte de plus une unité de traitement 7. L'unité de traitement 7 comprend au moins un composant de traitement 8, qui est par exemple un processeur « généraliste », un processeur spécialisé dans le traitement du signal (ou DSP, pour *Digital Signal Processor*), un microcontrôleur, ou bien un circuit logique programmable tel qu'un FPGA (pour *Field Programmable Gate Arrays*) ou un ASIC (pour *Application Specific Integrated Circuit*). L'unité de traitement 7 comprend aussi une ou des mémoires 9, reliées à ou intégrées dans le composant de traitement 8. Au moins l'une de ces mémoires 9 forme un support d'enregistrement lisible par ordinateur, sur lequel est enregistré au moins un programme d'ordinateur comprenant des instructions qui conduisent le composant de traitement 8 à exécuter au moins certaines des étapes du procédé de surveillance qui sera décrit plus bas.

L'unité de traitement 7 comprend une horloge 10 de type RTC (pour *Real Time Clock,* que l'on peut traduire par « horloge temps réel ») lui permettant d'intégrer un calendrier. Une resynchronisation périodique de l'horloge 10 est réalisée via un réseau de communication. L'horloge 10 permet de mettre en œuvre un chronomètre.

Le compteur 1 est connecté à un équipement qui intègre un capteur de température 11. Ici, l'équipement est positionné de sorte que la cellule sensible du capteur de température 11 est en contact avec l'air à l'extérieur de l'habitation de l'utilisateur. Le compteur 1 reçoit les mesures produites par le capteur 11, qui sont donc des mesures de la température régnant à l'extérieur de l'habitation.

Dans un mode de réalisation alternatif, l'équipement intégrant le capteur de température peut être situé à l'extérieur et à proximité du compteur, mais à l'intérieur de l'habitation, de manière à mesurer la température ambiante autour du compteur.

Dans un autre mode de réalisation, le capteur de température pourrait être situé à l'intérieur du compteur.

L'unité de traitement 7 acquiert les mesures de la température produites par le capteur de température 11.

Le compteur 1 comporte de plus des premiers moyens de communication qui lui permettent de communiquer avec un boîtier de coupure 12 situé à l'extérieur du compteur 1.

La distance d entre le compteur 1 et le boîtier de coupure 12 est typiquement comprise entre 1cm et 20cm.

Les premiers moyens de communication comprennent une première interface NFC 13 (pour *Near Field Communication,* que l'on peut traduire par « communication en champ proche »). Il s'agit d'une interface NFC « maître ».

Le boîtier de coupure 12 comprend un deuxième conduit interne 14, une vanne 15 et une deuxième interface NFC 16 (interface NFC « esclave »).

Le deuxième conduit interne 14 s'étend lui aussi dans la continuité du conduit principal 2 (et du premier conduit interne 5 du compteur 1).

La vanne 15 est une vanne motorisée (électromécanique). La vanne 15 comprend un organe mobile qui s'étend dans le deuxième conduit interne 14 et dont une position courante peut être commandée pour couper le débit de gaz. Ici, la vanne 15 est une vanne à bille et l'organe mobile est donc une bille ; la position courante de la bille est une position angulaire.

Le compteur 1 et le boîtier de coupure 12 communiquent via la première interface NFC 13 et la deuxième interface NFC 16. Le compteur 1 peut ainsi piloter la vanne 15 pour couper la fourniture de gaz à l'installation.

On décrit maintenant le procédé de surveillance qui est mis en œuvre dans l'unité de traitement 7 du compteur 1.

Le procédé de surveillance a pour but de détecter l'utilisation d'un système prédéterminé de l'installation 4 (parmi un ou plusieurs systèmes prédéterminés), et de couper le gaz fourni à l'installation 4 lorsque la consommation de gaz par ce système devient trop importante.

Les systèmes prédéterminés comprennent par exemple une chaudière, un chauffe-eau, une gazinière, une cheminée à gaz, etc.

Le procédé de surveillance est ici mis en œuvre à l'initiative de l'utilisateur (mais il pourrait être mis en œuvre systématiquement, ou bien à l'initiative du distributeur de gaz ou du gestionnaire du réseau).

Chaque jour courant est divisé en un ensemble prédéterminé d'au moins une période successive. Ici, chaque jour courant est divisé en N périodes successives Pk (k allant de 1 à N). Chaque période Pk a pour durée Hk et on a donc, pour chaque jour courant :

$$\sum_{k=1}^{N} Hk = 24\ heures$$

Les durées Hk de ces périodes Pk ne sont pas toutes nécessairement identiques.

La détection d'une possible surconsommation est réalisée par système prédéterminé, et période par période (et non pas quotidiennement, sauf si le jour courant comporte une seule période). Ainsi, chaque jour courant, pour chaque période courante, la coupure du gaz est commandée lorsque la consommation cumulée d'un même système prédéterminé devient trop importante sur ladite période courante.

La détection des phases de fonctionnement de ces systèmes prédéterminés consiste à détecter dans les mesures de la consommation de gaz des signatures représentatives chacune de l'utilisation d'un système prédéterminé particulier.

Chaque signature correspond à des valeurs particulières de paramètres prédéfinis relatifs à la consommation de gaz.

Ainsi, chaque jour courant, et pour chaque période courante, l'unité de traitement 7 analyse les mesures de la consommation de gaz et produit des mesures de paramètres prédéfinis relatifs à la consommation de gaz.

Par « mesure de la consommation de gaz », on entend toute mesure représentative de la consommation de gaz : index, mesure de débit, mesure de volume, etc.

Les paramètres prédéfinis comprennent par exemple une durée de tirage de gaz et/ou un débit de gaz moyen et/ou un volume de gaz consommé.

L'unité de traitement 7 détecte alors, à partir des mesures des paramètres prédéfinis, des phases de fonctionnement d'au moins un système prédéterminé de l'installation. Par « phase de fonctionnement », on entend une période au cours de laquelle le système prédéterminé fonctionne et tire du gaz de manière continue.

Puis, pour chaque système prédéterminé, si la consommation cumulée de gaz dudit système prédéterminé sur la période courante dépasse un seuil prédéterminé associé audit système prédéterminé, l'unité de traitement 7 commande une fermeture de la vanne 15 pour couper la fourniture de gaz à l'installation 4 jusqu'à la fin de la période courante.

La coupure du gaz consiste donc à modifier la position angulaire de la bille de la vanne 15 pour fermer la vanne 15.

On peut prévoir que, pour au moins l'un des systèmes prédéterminés, le seuil prédéterminé associé audit système prédéterminé dépende de la période courante du jour courant : il peut ainsi être pertinent d'autoriser une consommation plus importante le matin (avant de partir au travail ou à l'école) et le soir (au retour).

On peut aussi prévoir que, pour au moins l'un des systèmes prédéterminés, le seuil prédéterminé associé audit système prédéterminé dépende du jour courant : la consommation autorisée peut ainsi être plus importante le week-end ou lors d'un jour férié.

On peut aussi prévoir que, pour au moins l'un des systèmes prédéterminés, le seuil prédéterminé associé audit système prédéterminé dépende de la période de l'année à laquelle appartient le jour courant : l'hiver, la consommation autorisée peut ainsi être plus importante.

Le seuil prédéterminé peut aussi dépendre de plusieurs de ces paramètres, et donc de la période courante et/ou du jour courant et/ou de la période de l'année à laquelle appartient le jour courant.

Le système prédéterminé en question est par exemple une chaudière à gaz, dont la consommation de gaz est plus importante en hiver qu'en été.

De même, pour au moins l'un des systèmes prédéterminés (la chaudière à nouveau, par exemple), la détection des phases de fonctionnement dudit système prédéterminé peut comprendre l'étape de comparer les mesures des paramètres prédéfinis avec des niveaux prédéfinis qui dépendent de la période de l'année à laquelle appartient le jour courant.

L'unité de traitement 7 peut aussi utiliser les mesures de la température produites par le capteur de température 11.

On prévoit alors que, pour au moins l'un des systèmes prédéterminés (la chaudière à nouveau, par exemple), le seuil prédéterminé associé audit système prédéterminé dépend de la température mesurée par le capteur de température 11.

De même, on peut prévoir que, pour au moins l'un des systèmes prédéterminés, l'unité de traitement 7 soit agencée, pour détecter les phases de fonctionnement dudit système prédéterminé, pour comparer les mesures des paramètres prédéfinis avec des niveaux prédéfinis qui dépendent de la température mesurée par le capteur de température 11.

On peut aussi prévoir que les périodes prédéterminées comprennent une ou des périodes au cours desquelles la fermeture de la vanne 15 est interdite, et donc au cours desquelles le gaz ne peut pas être coupé.

Ces périodes comprennent par exemple une période le matin (avant de partir au travail, à l'école) et une période le soir (au retour).

L'utilisateur peut éventuellement définir lui-même ces périodes en communiquant avec le compteur 1, qui comprend alors des moyens de communication 18 adaptés à cet usage.

Ces moyens de communication 18 peuvent être des moyens radioélectriques sans fil (NFC, Wi-Fi, Bluetooth, etc.), voire même filaires. Il peut aussi s'agir d'une interface utilisant par exemple un ou des boutons et un écran positionné sur le compteur 1.

Le distributeur d'eau (ou le gestionnaire du réseau) pourrait aussi définir ces périodes ; dans ce cas, les deuxièmes moyens de communication 18 sont par exemple des moyens de communication cellulaires.

On note que les moyens de communication 18 peuvent être, plus généralement, utilisés par l'utilisateur et/ou par le distributeur d'eau (ou le gestionnaire du réseau) pour régler les seuils de consommation, le nombre et la durée des périodes successives dans les jours courants, etc.

On s'intéresse à un mode de réalisation particulier, dans lequel les systèmes prédéterminés d'une installation comprennent une chaudière à gaz 20 et un chauffe-eau 21.

Le type de consommation de gaz (chaudière 20 ou chauffe-eau 21) est reconnu par une signature qui est elle-même définie par les paramètres prédéfinis suivants : durée de tirage de gaz, débit de gaz moyen et volume de gaz consommé.

Le débit de gaz moyen appartient ainsi typiquement à une plage de débit différente (en L/minute) lorsque du gaz est tiré, selon que le système qui tire du gaz est une chaudière ou un chauffe-eau. De même, la durée de tirage de gaz est typiquement inférieure à un seuil temporel différent, et le volume de gaz consommé est typiquement inférieur à un seuil volumique différent, selon que le système qui tire du gaz est une chaudière ou un chauffe-eau.

Une chaudière est censée consommer environ 1000m3/an et tirer du gaz périodiquement (pendant 10 minutes à chaque fois par exemple), sur une durée cumulée de 8 heures par jour d'octobre à mars inclus, et de deux heures par jour d'avril à septembre inclus.

La consommation cumulée d'octobre à mars inclus est d'environ 800m3 et, entre octobre et mars, on a :

- Débit moyen : D = 9.16L/minute ;
- Durée de tirage : t = 10 minutes ;
- Seuil volumique de consommation quotidien de référence : S = 4395L.

La consommation cumulée d'avril à septembre inclus est d'environ 200m3 et, entre avril et septembre, on a :

- Débit moyen : D = 9.11L/minute ;
- Durée de tirage : t = 10 minutes ;
- Seuil volumique de consommation quotidien de référence : S = 1093L.

Un chauffe-eau est censé consommer environ 300m3/an et tirer du gaz « à la demande » afin de produire de l'eau chaude (cas d'une douche, d'un bain, lavabo salle de bain, évier cuisine). La durée cumulée du tirage de gaz est d'environ 1 heure par jour. On a :

- Débit moyen : D = 13.70L/minute ;
- Durée de tirage : t variable (quelques secondes (salle de bain, évier cuisine) à 5 minutes (douche) voire 15 minutes (bain) ;
- Seuil volumique de consommation quotidien de référence : S = 822L.

Le seuil volumique ne dépend donc pas de la période de l'année pour le chauffe-eau.

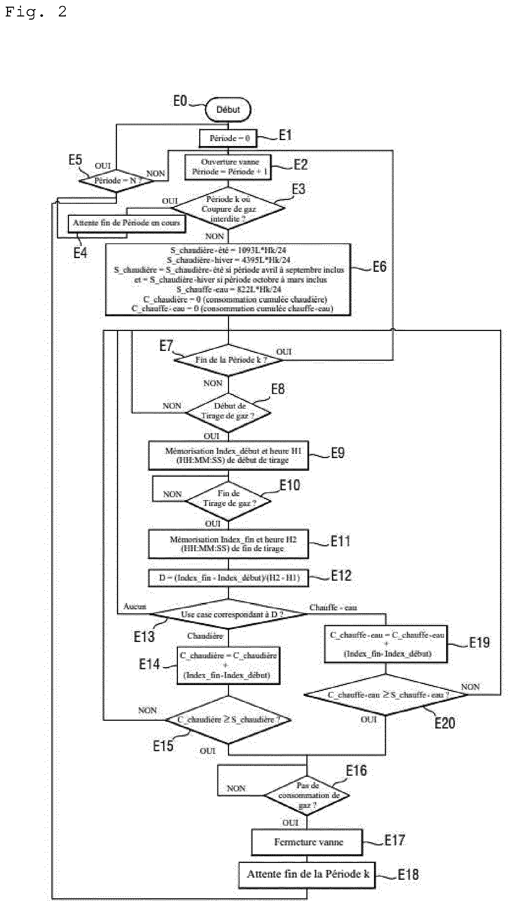

On décrit maintenant plus précisément, en référence à la figure 2, un exemple de mise en œuvre du procédé de surveillance.

Les N périodes successives Pk, et les durées Hk desdites périodes, sont préprogrammées dans une table stockée dans l'une des mémoires 9 de l'unité de traitement 7.

Comme on l'a vu, les périodes successives comprennent possiblement une ou des périodes au cours de lesquelles la fermeture de la vanne 15 est interdite.

Le procédé débute à l'étape E0, pour le jour courant.

La variable « Période » est initialisée à 0 (étape E1).

L'unité de traitement 7 ouvre alors la vanne 15, et incrémente la variable Période :

$$\text{Période} = \text{Période} + 1 \text{ (étape E2).}$$

L'unité de traitement 7 vérifie si la période courante Pk est une période dans laquelle la fermeture de la vanne 15 est interdite (étape E3).

Si c'est le cas, l'unité de traitement 7 attend la fin de la période courante Pk (étape E4), puis vérifie si la période courante Pk est la dernière du jour courant (c'est-à-dire si Période = N) : étape E5.

Si c'est le cas, le procédé passe à l'étape E1. Sinon, le procédé repasse à l'étape E2.

A l'étape E3, si la période courante Pk n'est pas une période dans laquelle la fermeture de la vanne 15 est interdite, le procédé passe à l'étape E6.

Les variables suivantes sont initialisées par l'unité de traitement 7 :

- Seuil_chaudière-été = 1093L*Hk/24 ;
- Seuil_chaudière-hiver = 4395L*Hk/24 ;
- Seuil_chaudière = Seuil_chaudière-été si le jour courant appartient à une période allant d'avril à septembre inclus, et Seuil_chaudière = Seuil_chaudière-hiver si le jour courant appartient à une période allant d'octobre à mars inclus ;
- S_chauffe-eau = 822L*Hk/24 ;
- C_chaudière = 0.

Ainsi, pour chaque période, et pour chaque système prédéterminé, le seuil de consommation prédéterminé est défini au prorata de la durée de ladite période rapportée au seuil de référence quotidien correspondant.

L'unité de traitement 7 vérifie alors si le temps présent correspond à la fin de la période courante (étape E7). Si c'est le cas, le procédé repasse à l'étape E2.

Sinon, l'unité de traitement 7 tente de détecter le début d'un tirage de gaz (c'est-à-dire qu'un système de l'installation commence à consommer du gaz) : étape E8.

On considère qu'un tirage de gaz a débuté si la consommation de gaz est supérieure ou égale à un seuil prédéfini (par exemple 1L) pendant une durée prédéfinie (par exemple 10s).

Tant que le début d'un tirage de gaz n'est pas détecté, le procédé repasse à l'étape E7 (puis à nouveau à l'étape E8 si on n'est pas à la fin de la période courante).

Lorsque le début d'un tirage de gaz est détecté, l'unité de traitement 7 mémorise l'index au début du tirage (Index_début) et l'heure H1 du début du tirage (HH : MM : SS) : étape E9.

La variable Index_début est l'index de consommation mesuré au temps présent par le dispositif de mesure 6 - c'est-à-dire le volume de gaz mesuré cumulé au temps présent.

Puis, l'unité de traitement 7 vérifie si le tirage de gaz est terminé (étape E10). Tant que le tirage de gaz n'est pas terminé, le procédé reboucle sur l'étape E10.

Lorsque le tirage de gaz est terminé, l'unité de traitement 7 mémorise l'index à la fin du tirage (Index_fin) et l'heure H2 de la fin du tirage (HH : MM : SS) : étape E11.

A la fin du tirage de gaz, l'unité de traitement 7 estime une durée du tirage de gaz (égale à H2 - H1) et un débit de gaz moyen au cours dudit tirage de gaz (étape E12).

Ici, l'unité de traitement 7 évalue le débit de gaz moyen en utilisant la formule :

$$D = (\text{Index\_fin} - \text{Index\_début})/(H2 - H1).$$

L'unité de traitement 7 tente alors de détecter à partir du débit de gaz moyen une phase de fonctionnement de l'un des au moins un système prédéterminé (étape E13).

Pour cela, l'unité de traitement 7 compare le débit de gaz moyen avec des niveaux prédéfinis.

Si le débit de gaz moyen D est tel que :

$$8L/minute \leq D \leq 10L/minute,$$

alors l'unité de traitement 7 détecte une phase de fonctionnement de la chaudière 20.

Si le débit de gaz moyen D est tel que :

$$13L/minute \leq D \leq 15L/minute,$$

alors l'unité de traitement 7 détecte une phase de fonctionnement du chauffe-eau 21.

Si aucun système prédéterminé ne correspond, le procédé passe à l'étape E7.

Si le système prédéterminé détecté est la chaudière 20, l'unité de traitement 7 calcule la consommation cumulée de gaz de la chaudière sur la période courante (étape E14) :

$$C\_chaudière = C\_chaudière + (Index\_fin - Index\_début)$$

L'unité de traitement 7 compare alors la consommation cumulée de gaz de la chaudière 20 sur la période courante Pk avec le seuil prédéterminé associé à la chaudière 20 (étape E15).

L'unité de traitement vérifie si :

$$C\_chaudière \geq S\_chaudière.$$

Si ce n'est pas le cas, le procédé repasse à l'étape E7.

Si c'est le cas, c'est-à-dire si la consommation cumulée de la chaudière 20 sur la période courante est supérieure (ici supérieure ou égale) au seuil prédéterminé, l'unité de traitement 7 vérifie par sécurité que la consommation courante de gaz est nulle (étape E16).

Tant que la consommation courante de gaz n'est pas nulle, le procédé reboucle sur l'étape E16.

Lorsque la consommation courante de gaz devient nulle, l'unité de traitement 7 commande la fermeture de la vanne 15 (étape E17).

L'unité de traitement 7 attend alors la fin de la période courante (étape E18), de sorte que la vanne 15 demeure fermée jusqu'à la fin de ladite période courante, puis le procédé repasse à l'étape E5.

De même, à l'étape E13, si le système prédéterminé détecté est le chauffe-eau 21, l'unité de traitement 7 calcule la consommation cumulée du chauffe-eau 21 (étape E19) :

$$C\_chauffe-eau = C\_chauffe-eau + (Index\_fin - Index\_début)$$

L'unité de traitement 7 compare alors la consommation cumulée du chauffe-eau 21 sur la période courante Pk avec le seuil prédéterminé associé au chauffe-eau (étape E20).

L'unité de traitement 7 vérifie si :

$$C\_chauffe-eau \geq S\_chauffe-eau.$$

Si ce n'est pas le cas, le procédé repasse à l'étape E7.

Si c'est le cas, c'est-à-dire si la consommation cumulée de gaz du chauffe-eau 21 sur la période courante est supérieure (ici supérieure ou égale) au seuil prédéterminé, l'unité de traitement 7 passe à l'étape E16.

Alternativement, comme des mesures de température sont disponibles, on peut prévoir que le seuil prédéterminé associé à l'un des systèmes prédéterminés (ou à plusieurs) dépende de la température mesurée par le capteur de température 11

On peut ainsi adapter le seuil prédéterminé pour la chaudière 20 en fonction de la température (en °C) mesurée par le capteur de température 11. On ne tient alors plus compte de la période calendaire.

Le seuil prédéterminé pour la chaudière 20 est par exemple :

- égal à une première valeur lorsque ladite température est inférieure à un premier seuil de température ;
- égal à une deuxième valeur lorsque ladite température est supérieure à un deuxième seuil de température ;
- égal à une fonction linéaire de ladite température lorsque ladite température est comprise entre le premier seuil de température et le deuxième seuil de température.

Ici, le premier seuil de température est égal à 0°C, le deuxième seuil de température est égal à 20°C, et on a, pour la période Pk de durée Hk heures (S est le seuil prédéterminé, T la température mesurée par le capteur 11) :

- si T < 0°C, S = 4395*Hk/24
- si T > 20°C, S = 1093*Hk/24
- Si 0°C ≤ T ≤ 20°C :

$$S = (1093+(4395-1093)*(20-T)/20)*Hk/24$$

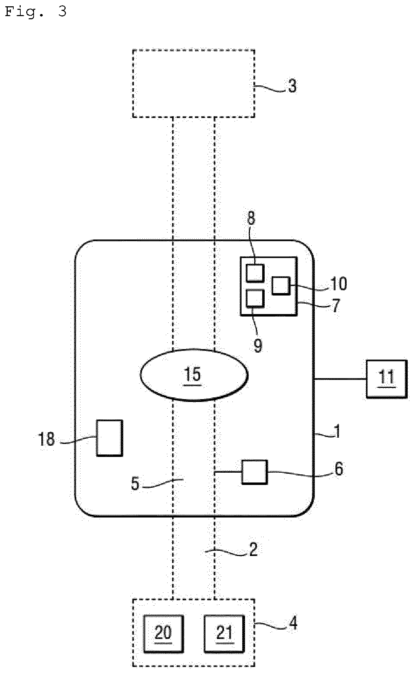

Dans un deuxième mode de réalisation, en référence à la figure 3, la vanne 15 n'est cette fois pas située dans un boîtier de coupure à l'extérieur du compteur 1, mais est intégrée dans le compteur 1. Le procédé de surveillance est mis en œuvre de la même manière si ce n'est que, dans cette configuration, le compteur 1 n'a pas besoin de communiquer avec un équipement externe : l'unité de traitement 7 pilote directement la vanne 15.

Bien entendu, l'invention n'est pas limitée aux modes de réalisation décrits mais englobe toute variante entrant dans le champ de l'invention tel que défini par les revendications.

Les signatures des systèmes prédéterminés ne sont pas définies forcément par la durée de tirage de gaz, le débit de gaz moyen et le volume de gaz consommé, mais peuvent être définies par un ou deux de ces paramètres prédéfinis seulement.

Les paramètres prédéfinis peuvent d'ailleurs être différents de ceux décrits ici, et pourraient par exemple comprendre une pente de consommation ou un débit courant (et non moyen).

Les systèmes prédéterminés de l'installation, dont la consommation est surveillée, peuvent comprendre un ou des systèmes différents, et par exemple une gazinière, une cheminée à gaz, etc.

## Revendications

1. Compteur de gaz (1) comprenant :

   - un dispositif de mesure (6) agencé pour produire des mesures d'une consommation de gaz d'une installation (4) ;
   - une vanne (15), ou des moyens de communication (13) avec un boîtier de coupure (12) situé à l'extérieur du compteur et intégrant une vanne ;
   - une unité de traitement (7),

   **caractérisé en ce que** l'unité de traitement (7) est agencée pour, chaque jour courant, au cours de chaque période courante d'un ensemble prédéterminé d'au moins une période successive définie dans le jour courant :

   o analyser les mesures de la consommation de gaz pour produire des mesures de paramètres prédéfinis relatifs à la consommation de gaz, et détecter, à partir desdites mesures des paramètres prédéfinis, une ou des phases de fonctionnement d'au moins un système prédéterminé (20, 21) de l'installation ;
   o pour chaque système prédéterminé, suite à chaque phase de fonctionnement dudit système prédéterminé, si une consommation cumulée de gaz pendant la période courante dudit système prédéterminé dépasse un seuil prédéterminé associé audit système prédéterminé, fermer la vanne (15) jusqu'à la fin de ladite période courante.

2. Compteur de gaz selon la revendication 1, dans lequel les paramètres prédéfinis comprennent une durée de tirage de gaz et/ou un débit de gaz moyen et/ou un volume de gaz consommé.

3. Compteur de gaz selon l'une des revendications précédentes, dans lequel, pour au moins l'un des au moins un système prédéterminé, le seuil prédéterminé associé audit système prédéterminé dépend de ladite période courante et/ou du jour courant et/ou de la période de l'année à laquelle appartient le jour courant.

4. Compteur de gaz selon l'une des revendications précédentes, le compteur de gaz comprenant un capteur de température ou étant connecté à un équipement intégrant un capteur de température (11), le compteur de gaz étant tel que, pour au moins l'un des au moins un système prédéterminé, le seuil prédéterminé associé audit système prédéterminé dépend d'une température mesurée par le capteur de température.

5. Compteur de gaz selon la revendication 4, dans lequel ledit seuil prédéterminé est :

- égal à une première valeur lorsque ladite température est inférieure à un premier seuil ;
- égal à une deuxième valeur lorsque ladite température est supérieure à un deuxième seuil ;
- égal à une fonction linéaire de ladite température lorsque ladite température est comprise entre le premier seuil et le deuxième seuil.

6. Compteur de gaz selon l'une des revendications précédentes, dans lequel, pour au moins l'un des au moins un système prédéterminé, l'unité de traitement (7) est agencée, pour détecter les phases de fonctionnement dudit système prédéterminé, pour comparer les mesures des paramètres prédéfinis avec des niveaux prédéfinis qui dépendent de la période de l'année à laquelle appartient le jour courant.

7. Compteur de gaz selon l'une des revendications précédentes, le compteur de gaz comprenant un capteur de température ou étant connecté à un équipement intégrant un capteur de température (11), le compteur de gaz étant tel que, pour au moins l'un des au moins un système prédéterminé, l'unité de traitement (7) est agencée, pour détecter les phases de fonctionnement dudit système prédéterminé, pour comparer les mesures des paramètres prédéfinis avec des niveaux prédéfinis qui dépendent d'une température mesurée par le capteur de température.

8. Compteur de gaz selon l'une des revendications précédentes, dans lequel l'ensemble prédéterminé d'au moins une période successive comprend au moins une période au cours de laquelle la fermeture de la vanne (15) est interdite.

9. Compteur de gaz selon l'une des revendications précédentes, dans lequel les au moins un système prédéterminé comprennent une chaudière (20) et un chauffe-eau (21).

10. Compteur de gaz selon l'une des revendications précédentes, dans lequel la vanne (15) est une vanne à bille.

11. Procédé de surveillance, mis en œuvre dans l'unité de traitement (7) d'un compteur de gaz (1) selon l'une des revendications précédentes,
**caractérisé en ce que** le procédé de surveillance comprend les étapes, chaque jour courant, au cours de chaque période courante d'un ensemble prédéterminé d'au moins une période successive définie dans le jour courant, de :

o analyser les mesures de la consommation de gaz pour produire des mesures de paramètres prédéfinis relatifs à la consommation de gaz, et détecter, à partir desdites mesures des paramètres prédéfinis, une ou des phases de fonctionnement d'au moins un système prédéterminé (20, 21) de l'installation ;
o pour chaque système prédéterminé, suite à chaque phase de fonctionnement dudit système prédéterminé, si une consommation cumulée de gaz pendant la période courante dudit système prédéterminé dépasse un seuil prédéterminé associé audit système prédéterminé, fermer la vanne (15) jusqu'à la fin de ladite période courante.

12. Procédé de surveillance selon la revendication 11, comprenant les étapes, pour la période courante, de :

- détecter un début d'un tirage de gaz ;
- à la fin dudit tirage de gaz, estimer un débit de gaz moyen au cours dudit tirage de gaz ;
- détecter à partir du débit de gaz moyen une phase de fonctionnement de l'un des au moins un système prédéterminé de l'installation ;
- comparer la consommation cumulée de gaz pendant la période courante dudit système prédéterminé avec le seuil prédéterminé associé audit système prédéterminé ;
- si la consommation cumulée de gaz dudit système prédéterminé est supérieure audit seuil prédéterminé, vérifier qu'une consommation courante de gaz est nulle et, si c'est le cas, fermer la vanne (15) jusqu'à la fin de ladite période courante.

13. Procédé de surveillance selon la revendication 12, comprenant l'étape préliminaire de vérifier que la période courante n'est pas une période au cours de laquelle la fermeture de la vanne (15) est interdite.

14. Programme d'ordinateur comprenant des instructions qui conduisent l'unité de traitement (7) du compteur de gaz (1) selon l'une des revendications 1 à 10 à exécuter les étapes du procédé de surveillance selon l'une des revendications 11 à 13.

15. Support d'enregistrement lisible par ordinateur, sur lequel est enregistré le programme d'ordinateur selon la revendication 14.

**Patentansprüche**

1. Gaszähler (1) umfassend:

   - eine Messvorrichtung (6), die dafür ausgelegt ist, Messdaten zu einem Gasverbrauch einer Anlage (4) zu erzeugen;
   - ein Ventil (15) bzw. Kommunikationsmittel (13) mit einem außerhalb des Zählers befindlichen Abschaltkasten (12), in dem ein Ventil integriert ist;
   - eine Verarbeitungseinheit (7),

   **dadurch gekennzeichnet, dass** die Verarbeitungseinheit (7) derart ausgelegt ist, dass sie an jedem laufenden Tag während jedes laufenden Zeitraums aus einer vorbestimmten Gesamtheit bestehend aus besagtem Zeitraum und aus zumindest einem an dem laufenden Tag definierten Folgezeitraum:

   o die Gasverbrauchs-Messdaten analysiert, um Messdaten für vorgegebene gasverbrauchsspezifische Parameter zu erzeugen, und aus den Messdaten für die vorgegebenen Parameter eine oder mehrere Betriebsphasen von zumindest einem vorbestimmten System (20, 21) der Anlage erkennt;
   o für jedes vorbestimmte System im Anschluss an jede Betriebsphase des vorbestimmten Systems das Ventil (15) schließt und bis zum Ende des laufenden Zeitraums verschlossen hält, wenn ein während des laufenden Zeitraums kumulierter Gasverbrauch des vorbestimmten Systems einen dem vorbestimmten System zugeordneten, vorbestimmten Schwellenwert übersteigt.

2. Gaszähler nach Anspruch 1, wobei die vorgegebenen Parameter eine Gasentnahmedauer und/oder einen mittleren Gasdurchfluss und/oder ein verbrauchtes Gasvolumen umfassen.

3. Gaszähler nach einem der vorhergehenden Ansprüche, wobei für zumindest eines der aus zumindest einem System bestehenden, vorbestimmten Systeme der dem vorbestimmten System zugeordnete, vorbestimmte Schwellenwert von dem laufenden Zeitraum und/oder dem laufenden Tag und/oder dem laufenden Jahreszeitraum, zu welchem der laufende Tag gehört, abhängig ist.

4. Gaszähler nach einem der vorhergehenden Ansprüche, wobei der Gaszähler einen Temperatursensor umfasst oder an eine Ausrüstung mit integriertem Temperatursensor (11) angeschlossen ist, wobei der Gaszähler derart beschaffen ist, dass für zumindest eines der aus zumindest einem System bestehenden, vorbestimmten Systeme der dem vorbestimmten System zugeordnete, vorbestimmte Schwellenwert von einer von dem Temperatursensor gemessenen Temperatur abhängig ist.

5. Gaszähler nach Anspruch 4, wobei der vorbestimmte Schwellenwert:

   - gleich einem ersten Wert ist, wenn die Temperatur kleiner als ein erster Schwellenwert ist;
   - gleich einem zweiten Wert ist, wenn die Temperatur größer als ein zweiter Schwellenwert ist;
   - gleich einer linearen Funktion der Temperatur ist, wenn die Temperatur zwischen dem ersten Schwellenwert und dem zweiten Schwellenwert liegt.

6. Gaszähler nach einem der vorhergehenden Ansprüche, wobei für zumindest eines der aus zumindest einem System bestehenden, vorbestimmten Systeme die Verarbeitungseinheit (7) derart ausgelegt ist, dass sie die Betriebsphasen des vorbestimmten Systems erkennt und die Messdaten für die vorgegebenen Parameter mit vorgegebenen Pegeln vergleicht, die von dem Jahreszeitraum, zu dem der laufende Tag gehört, abhängig sind.

7. Gaszähler nach einem der vorhergehenden Ansprüche, wobei der Gaszähler einen Temperatursensor umfasst oder an eine Ausrüstung mit integriertem Temperatursensor (11) angeschlossen ist, wobei der Gaszähler derart beschaffen ist, dass für zumindest eines der aus zumindest einem System bestehenden, vorbestimmten Systeme die Verarbeitungseinheit (7) dafür ausgelegt ist, dass sie die Betriebsphasen des vorbestimmten Systems erkennt und die Messdaten für die vorgegebenen Parameter mit vorgegebenen Pegeln, die von einer von dem Temperatursensor gemessenen Temperatur abhängig sind, vergleicht.

8. Gaszähler nach einem der vorhergehenden Ansprüche, wobei die vorbestimmte Gesamtheit bestehend aus besagtem Zeitraum und aus zumindest einem Folgezeitraum zumindest einen Zeitraum umfasst, in welchem das Schließen des Ventils (15) verboten ist.

9. Gaszähler nach einem der vorhergehenden Ansprüche, wobei das zumindest eine vorbestimmte System einen Heizkessel (20) bzw. ein Heißwassergerät (21) umfasst.

10. Gaszähler nach einem der vorhergehenden Ansprüche, wobei es sich bei dem Ventil (15) um ein Kugelventil handelt.

11. Überwachungsverfahren, welches in der Verarbeitungseinheit (7) eines Gaszählers (1) nach einem der vorhergehenden Ansprüche ausgeführt wird, **dadurch gekennzeichnet, dass** das Überwachungsverfahren an jedem laufenden Tag während jedes laufenden Zeitraums aus einer vorbestimmten Gesamtheit bestehend aus besagtem Zeitraum und aus zumindest einem an dem laufenden Tag definierten Folgezeitraum die Schritte umfasst, dass:

   o die Gasverbrauchs-Messdaten analysiert werden, um Messdaten für vorgegebene gasverbrauchsspezifische Parameter zu erzeugen, und aus den Messdaten für die vorgegebenen Parameter eine oder mehrere Betriebsphasen von zumindest einem vorbestimmten System (20, 21) der Anlage erkannt werden;
   o für jedes vorbestimmte System im Anschluss an jede Betriebsphase des vorbestimmten Systems das Ventil (15) geschlossen wird und bis zum Ende des laufenden Zeitraums verschlossen bleibt, wenn ein während des laufenden Zeitraums kumulierter Gasverbrauch des vorbestimmten Systems einen dem vorbestimmten System zugeordneten, vorbestimmten Schwellenwert übersteigt.

12. Überwachungsverfahren nach Anspruch 11, welches für den laufenden Zeitraum die Schritte umfasst, dass:

   - ein Beginnzeitpunkt einer Gasentnahme erkannt wird;
   - am Ende der Gasentnahme ein mittlerer Gasdurchfluss während der Gasentnahme geschätzt wird;
   aus dem mittleren Gasdurchfluss eine Betriebsphase eines der aus zumindest einem System bestehenden, vorbestimmten Systeme der Anlage erkannt wird;
   - der während des laufenden Zeitraums kumulierte Gasverbrauch des vorbestimmten Systems mit dem diesem vorbestimmten System zugeordneten, vorbestimmten Schwellenwert verglichen wird;
   - wenn der kumulierte Gasverbrauch des vorbestimmten Systems den vorbestimmten Schwellenwert übersteigt, überprüft wird, ob ein laufender Gasverbrauch gleich null ist und, wenn dies der Fall ist, das Ventil (15) geschlossen wird und bis zum Ende dieses laufenden Zeitraums verschlossen bleibt.

13. Überwachungsverfahren nach Anspruch 12, das den vorbereitenden Schritt umfasst, in welchem geprüft wird, dass es sich bei dem laufenden Zeitraum nicht um einen Zeitraum handelt, in dem das Schließen des Ventils (15) verboten ist.

14. Computerprogramm, das Befehle umfasst, welche die Verarbeitungseinheit (7) des Gaszählers (1) nach einem der Ansprüche 1 bis 10 dazu veranlassen, die Schritte des Überwachungsverfahrens nach einem der Ansprüche 11 bis 13 auszuführen.

15. Computerlesbares Speichermedium, auf welchem das Computerprogramm nach Anspruch 14 abgespeichert ist.


**Claims**

1. Gas meter (1) comprising:

   - a measuring device (6) arranged to produce measurements of a gas consumption of an installation (4);
   - a valve (15), or means (13) for communicating with a cutoff box (12) located outside of the meter and integrating a valve;
   - a processing unit (7) **characterized in that** the processing unit (7) is arranged for, each current day, during each current period of a predetermined set of at least one successive period defined in the current day:

   o analysing the measurements of the gas consumption to produce predefined parameter measurements relating to the gas consumption, and detecting, from said predefined parameter measurements, one or more operating phases of at least one predetermined system (20, 21) of the installation;
   o for each predetermined system, following each operating phase of said predetermined system, if a cumulated gas consumption during the current period of said predetermined system exceeds a predetermined threshold associated with said predetermined system, closing the valve (15) until the end of said current period.

**2.** Gas meter according to claim 1, wherein the predefined parameters comprise a gas draw duration and/or an average gas flow and/or a volume of gas consumed.

**3.** Gas meter according to one of the preceding claims, wherein, for at least one of the at least one predetermined system, the predetermined threshold associated with said predetermined system depends on said current period and/or on the current day and/or on the period of the year to which the current day belongs.

**4.** Gas meter according to one of the preceding claims, the gas meter comprising a temperature sensor or being connected to a piece of equipment integrating a temperature sensor (11), the gas meter being such that, for at least one of the at least one predetermined system, the predetermined threshold associated with said predetermined system depends on a temperature measured by the temperature sensor.

**5.** Gas meter according to claim 4, wherein said predetermined threshold is:

- equal to the first value when said temperature is less than a first threshold;
- equal to a second value when said temperature is greater than a second threshold;
- equal to a linear function of said temperature when said temperature is comprised between the first threshold and the second threshold.

**6.** Gas meter according to one of the preceding claims, wherein, for at least one of the at least one predetermined system, the processing unit (7) is arranged, to detect the operating phases of said predetermined system, to compare the predefined parameter measurements with predefined levels which depend on the period of the year to which the current day belongs.

**7.** Gas meter according to one of the preceding claims, the gas meter comprising a temperature sensor or being connected to a piece of equipment integrating a temperature sensor (11), the gas meter being such that, for at least one of the at least one predetermined system, the processing unit (7) is arranged, to detect the operating phases of said predetermined system, to compare the predefined parameter measurements with predefined levels which depend on a temperature measured by the temperature sensor.

**8.** Gas meter according to one of the preceding claims, wherein the predetermined set of at least one successive period comprises at least one period during which the closing of the valve (15) is prohibited.

**9.** Gas meter according to one of the preceding claims, wherein the at least one predetermined system comprises a boiler (20) and a water heater (21).

**10.** Gas meter according to one of the preceding claims, wherein the valve (15) is a ball valve.

**11.** Monitoring method, implemented in the processing unit (7) of a gas meter (1) according to one of the preceding claims, **characterized in that** the monitoring method comprises the steps, each current day, during each current period of a predetermined set of at least one successive period defined in the current day, of:

o analysing the measurements of the gas consumption to produce predefined parameter measurements relating to the gas consumption, and detecting, from said predefined parameter measurements, one or more operating phases of at least one predetermined system (20, 21) of the installation;
o for each predetermined system, following each operating phase of said predetermined system, if a cumulated gas consumption during the current period of said predetermined system exceeds a predetermined threshold associated with said predetermined system, closing the valve (15) until the end of said current period.

**12.** Monitoring method according to claim 11, comprising the steps, for the current period, of:

- detecting a start of a gas draw;
- at the end of said gas draw, estimating an average gas flow during said gas draw;
- detecting, from the average gas flow, an operating phase of one of the at least one predetermined system of the installation;
- comparing the cumulated gas consumption during the current period of said predetermined system with the predetermined threshold associated with said predetermined system;
- if the cumulated gas consumption of said predetermined system is greater than said predetermined threshold, verifying that a current gas consumption is zero and, if this is the case, closing the valve (15) until the end of said current period.

13. Monitoring method according to claim 12, comprising the preliminary step of verifying that the current period is not a period during which the closing of the valve (15) is prohibited.

14. Computer program comprising instructions which lead to the processing unit (7) of the gas meter (1) according to one of claims 1 to 10, executing the steps of the monitoring method according to one of claims 11 to 13.

15. Recording medium which can be read by a computer, on which the computer program is recorded, according to claim 14.

Fig. 1

Fig. 2

**E0** — Début

**E1** — Période = 0

**E2** — Ouverture vanne
Période = Période + 1

**E5** — Période = N ? — OUI / NON

**E3** — Période k où
Coupure de gaz
interdite ? — OUI / NON

**E4** — Attente fin de Période en cours

**E6** —
S_chaudière-été = 1093L*Hk/24
S_chaudière-hiver = 4395L*Hk/24
S_chaudière = S_chaudière-été si période avril à septembre inclus
et = S_chaudière-hiver si période octobre à mars inclus
S_chauffe-eau = 822L*Hk/24
C_chaudière = 0 (consommation cumulée chaudière)
C_chauffe-eau = 0 (consommation cumulée chauffe-eau)

**E7** — Fin de la Période k ? — OUI / NON

**E8** — Début de
Tirage de gaz ? — NON / OUI

**E9** — Mémorisation Index_début et heure H1
(HH:MM:SS) de début de tirage

**E10** — Fin de
Tirage de gaz ? — NON / OUI

**E11** — Mémorisation Index_fin et heure H2
(HH:MM:SS) de fin de tirage

**E12** — D = (Index_fin - Index_début)/(H2 - H1)

**E13** — Use case correspondant à D ? — Aucun / Chaudière / Chauffe-eau

**E14** — C_chaudière = C_chaudière
+
(Index_fin-Index_début)

**E19** — C_chauffe-eau = C_chauffe-eau
+
(Index_fin- Index_début)

**E15** — C_chaudière ≥ S_chaudière ? — NON / OUI

**E20** — C_chauffe-eau ≥ S_chauffe-eau ? — OUI / NON

**E16** — Pas de
consommation de
gaz ? — NON / OUI

**E17** — Fermeture vanne

**E18** — Attente fin de la Période k

16

Fig. 3

**RÉFÉRENCES CITÉES DANS LA DESCRIPTION**

**Documents brevets cités dans la description**

- US 2020116541 A